# EUROPEAN PATENT APPLICATION

(11) **EP 3 438 822 A1**
(43) Date of publication of application: **06.02.2019**
(21) Application number: 17774847.2
(22) Date of filing: 27.03.2017
(51) Int. Cl.: G06F 9/50, G06F 9/46, H04L 12/70, H04L 12/713, H04L 12/717

(54) **MANAGEMENT METHOD AND MANAGEMENT DEVICE IN NETWORK SYSTEM**

(30) Priority: 31.03.2016 JP 2016070566
(71) Applicant: NEC Corporation, Tokyo 108-8001 (JP)
(72) Inventor: NAKANO Shintaro, Tokyo 108-8001 (JP); HASEGAWA Hideo, Tokyo 108-8001 (JP); ISHII Satoru, Tokyo 108-8001 (JP); SHIBATA Seiya, Tokyo 108-8001 (JP)
(74) Representative: Robson, Aidan John
(86) International application number: PCT/JP2017/012222
(87) International publication number: WO 2017/170310

(57) **Abstract**

A management method, a management apparatus, and a network system, for efficiently managing a network including programmable logic circuits as a VNF infrastructure, are provided. A management apparatus (10) for a network including servers on which virtual network functions operate stores at least one virtual network function (VNF-1 to VNF-5) operating on a server (A, B, C, D), and server attribute information indicating whether or not the server supports a programmable logic circuit as an operation subject of the virtual network function, wherein the at least one virtual network function and the server attribute information are associated with each other. The management apparatus, at least, manages the server that includes the programmable logic circuit based on the associated information, wherein the virtual network function operations on the server.

## Description

### TECHNICAL FIELD

The present invention relates to a network system including virtual network functions, and in particular, to a management method and a management apparatus for the same.

### BACKGROUND ART

In current communication systems, various network functions (NFs) such as broadband remote access server (BRAS), network address translation (NAT), router, firewall (FW), and deep packet inspection (DPI) are implemented by dedicated hardware (appliances). As such, when launching a new network service, a network operator is forced to introduce new dedicated hardware appliances. This requires significant costs for purchasing appliances, installation spaces, and the like. In view of such a situation, consideration is given on a technology of virtually implementing network functions implemented by hardware, by software (network function virtualization) recently (Non-Patent Literature 1). As an example of network service virtualization, Patent Literature 1 discloses a method in which a plurality of virtual routers are constructed on communication node devices, and resources of the virtual routers are dynamically distributed according to the communication quality.

Further, a technology of providing various network services by transferring a communication flow to a communication path in which a plurality of virtual network functions (VNFs) are combined is also considered (See Non-Patent Literature 2, for example).

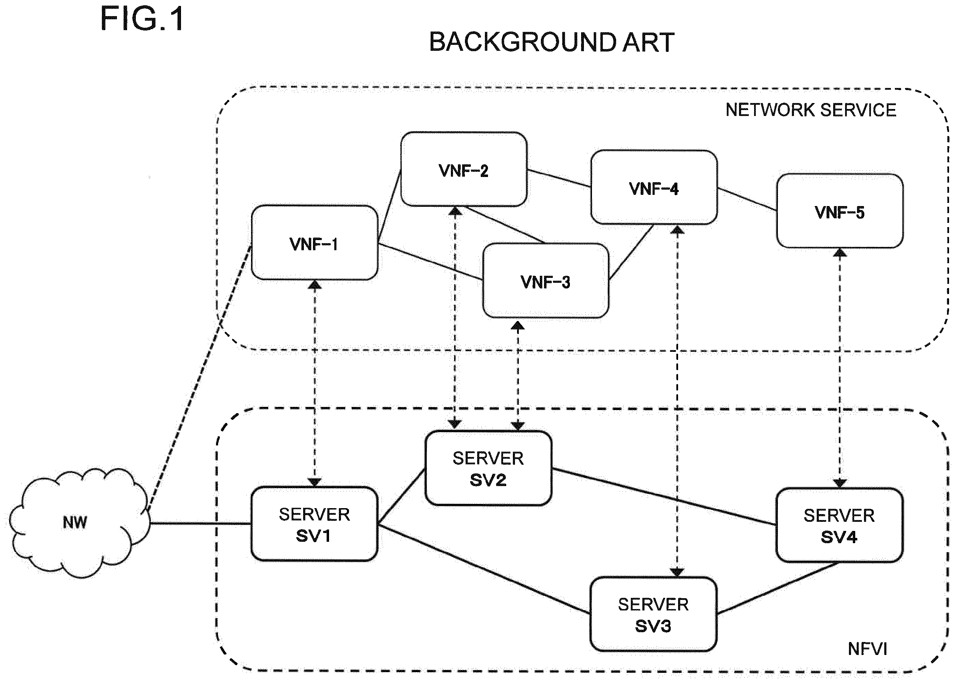

As illustrated in Fig. 1, in network function virtualization, network services are configured and managed by logical links (forwarding graph) of virtual network functions (VNFs). In this example, a network service including five virtual network functions VNF-1 to VNF-5 is illustrated in an overlay network.

The virtual network functions VNF-1 to VNF-5 in the forwarding graph operate on general-purpose servers SV1 to SV4 in the NFV infrastructure (NFVI). By virtually operating carrier grade functions on general-purpose servers rather than dedicated servers, it is possible to achieve cost reduction and easy operation.

### CITED LITERATURE

[Patent Literature 1] JP 2012-175418 A
[Non-Patent Literature 1] Network Functions Virtualization - Update White Paper, October 15-17, 2013 at the "SDN and OpenFlow World Congress", Frankfurt-Germany (http://portal.etsi.org/NFV/NFV_White_Paper2.pdf)
[Non-Patent Literature 2] ETSI GS NFV 001 v1.1.1 (2013-10) "Network Functions Virtualization (NFV); Use Cases" (http://docbox.etsi.org/ISG/NFV/Open/Published/gs_NFV001v010101p%20-%20Use%20Cas es.pdf)

### SUMMARY OF THE INVENTION

However, when attempting to construct NFV by general-purpose servers, there is a case where a bottleneck occurs in CPU (central processing unit) processing of a server, communication between servers, and the like. In order to prevent such a bottleneck, it is indispensable to achieve high-speed processing of the servers. As a technology of accelerating CPU processing, in addition to an increase of the number of CPU cores, an accelerator technology of connecting a field-programmable gate array (FPGA) to a CPU has been known (for example, "Xeon + FPGA Platform for the Data Center" ISCA/CARL 2015 <http://www.ece.cmu.edu/∼calcm/carl/lib/exe/fetch.php?media=carl15-gupta.pdf>).

However, in the case of constructing NFV with use of such a server to which an FPGA is added, a VNF operates not only on the CPU but also on the FPGA. Accordingly, it is necessary to manage a correspondence between the FPGA and the VNF in the network. For example, it is necessary to solve a problem of whether or not a server is FPGA-equipped, a problem of which VNF useswhich FPGA, and a problem that when, how, and what is set to an FPGA when a correspondence relation between a VNF and NFVI (COTS (commercial Off-The Shelf) server/VM/FPGA) is changed.

As described above, in a network including not only CPUs of servers but also programmable logic circuits such as FPGAs as a VNF infrastructure, it is necessary to have a special management system in consideration of programmable logic circuits.

In view of the above, an exemplary object of the present invention is to provide a management method, a management apparatus, and a network system, for efficiently managing a network including programmable logical circuits as a VNF infrastructure.

A network management apparatus according to the present invention is a management apparatus for a network including servers on which virtual network functions operate. The management apparatus includes a storage means for storing at least one virtual network function operating on a server and server attribute information, which are associated with each other. The server attribute information indicates whether or not the server includes a programmable logic circuit as an operation subject of the virtual network function. The management apparatus also includes a management means for, at least, managing the server that includes the programmable logic circuit based on the associated information, wherein the virtual network function operates on the server.

A network management method according to the present invention is a management method for a network including servers on which virtual network functions operate. The management method includes, by storage means, storing at least one virtual network function operating on a server and server attribute information, which are associated with each other. The server attribute information indicates whether or not the server includes a programmable logic circuit as an operation subject of the virtual network function. The management method also includes, by a management means, at least, managing at least one server that includes the programmable logic circuit based on the associated information, wherein the virtual network function operates on the server.

A network system according to the present invention is a network system including servers on which virtual network functions operate. The network system includes a lower-layer network in which a plurality of servers are connected, the servers including at least one server supporting a programmable logic circuit, an upper-layer network including at least one virtual network function operable on any of the servers, and a management apparatus that manages the lower-layer network and the upper-layer network. The management apparatus, at least, manages the server that includes a programmable logic circuit based on associated information, wherein a virtual network function operates on the server, wherein the associated information associates at least one virtual network function operating on a server with server attribute information which indicates whether or not the server includes a programmable logic circuit as an operation subject of the virtual network function.

According to the present invention, it is possible to efficiently manage a network including programmable logic circuits as a VNF infrastructure.

### BRIEF DESCRIPTION OF THE DRAWINGS

Fig. 1 is a schematic network diagram illustrating an example of virtualization of network functions.
Fig. 2 is a schematic network diagram illustrating an exemplary network system to which the present invention is applied.
Fig. 3 is a schematic network diagram illustrating correspondence relations between physical servers and virtual network functions in a network system to which the present invention is applied.
Fig. 4 is a block diagram illustrating a schematic configuration of a management apparatus according to a first exemplary embodiment of the present invention.
Fig. 5 is a schematic diagram illustrating an exemplary management database in the management apparatus illustrated in Fig. 4.
Fig. 6 is a flowchart illustrating a management method (server selection control for VM/VNF startup) according to a second exemplary embodiment of the present invention.
Fig. 7 is a schematic diagram illustrating a first example of a management database in the management method illustrated in Fig. 6.
Fig. 8 is a schematic diagram illustrating a second example of a management database in the management method illustrated in Fig. 6.
Fig. 9 is a schematic diagram illustrating a third example of a management database in the management method illustrated in Fig. 6.
Fig. 10 is a schematic diagram illustrating a fourth example of a management database in the management method illustrated in Fig. 6.
Fig. 11 is a flowchart illustrating a management method (server selection control for VM migration) according to a third exemplary embodiment of the present invention.
Fig. 12 is a schematic diagram illustrating a first example of a management database at the time of DPI migration in the management method illustrated in Fig. 11.
Fig. 13 is a schematic diagram illustrating a second example of a management database at the time of DPI migration in the management method illustrated in Fig. 11.
Fig. 14 is a schematic diagram illustrating an example of a management database illustrating priority control for server selection in a management method according to a fourth exemplary embodiment of the present invention.
Fig. 15 is a flowchart illustrating a management method (path change control) according to a fifth exemplary embodiment of the present invention.
Fig. 16 is a schematic network diagram before a path change for explaining an example of path change control illustrated in Fig. 15.
Fig. 17 is a schematic diagram illustrating an exemplary management database in the system state illustrated in Fig. 16.
Fig. 18 is a network diagram schematically illustrating a system when a failure occurs.
Fig. 19 is a schematic diagram illustrating an example of a change in the management database before and after the occurrence of a failure illustrated in Fig. 18.
Fig. 20 is a block diagram schematically illustrating an example of correspondence relations between physical servers and virtual network functions when another server is started due to occurrence of a failure.
Fig. 21 is a network diagram schematically illustrating a system after a path change by path change control.
Fig. 22 is a network diagram schematically illustrating a system when a failure occurs for explaining a management method according to a sixth exemplary embodiment of the present invention.
Fig. 23 is a block diagram schematically illustrating an example of correspondence relations between physical servers and virtual network functions when another server is started due to occurrence of a failure.
Fig. 24 is a schematic network diagram illustrating an exemplary network system according to the sixth exemplary embodiment of the present invention.

### EXEMPLARY EMBODIMENTS

### <Outline of Exemplary Embodiments>

According to exemplary embodiments of the present invention, in a network system in which virtual network functions (VNFs) can operate on servers, the network is managed by retaining a correspondence relation between a server, programmable logical circuits included in the server, and VNFs operating on the server. For example, by considering whether or not each server supports a programmable logic circuit, the type of the programmable logic circuit, and the type of a VNF operating on the programmable logic circuit, it is possible to prevent a bottleneck of processing capability and communication capacity when providing a series of VNFs. Accordingly, network management can be performed efficiently.

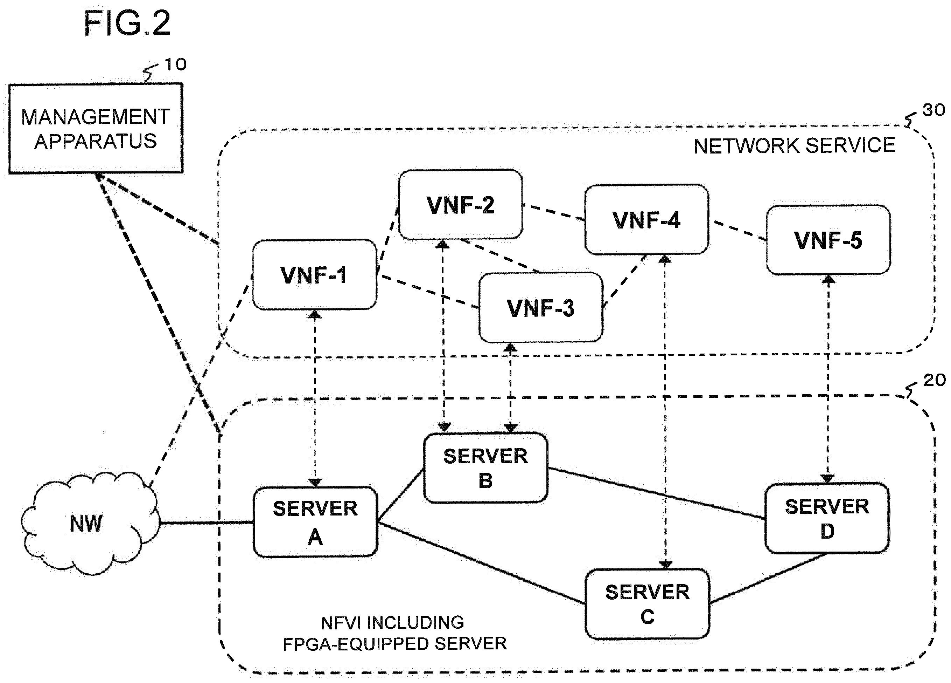

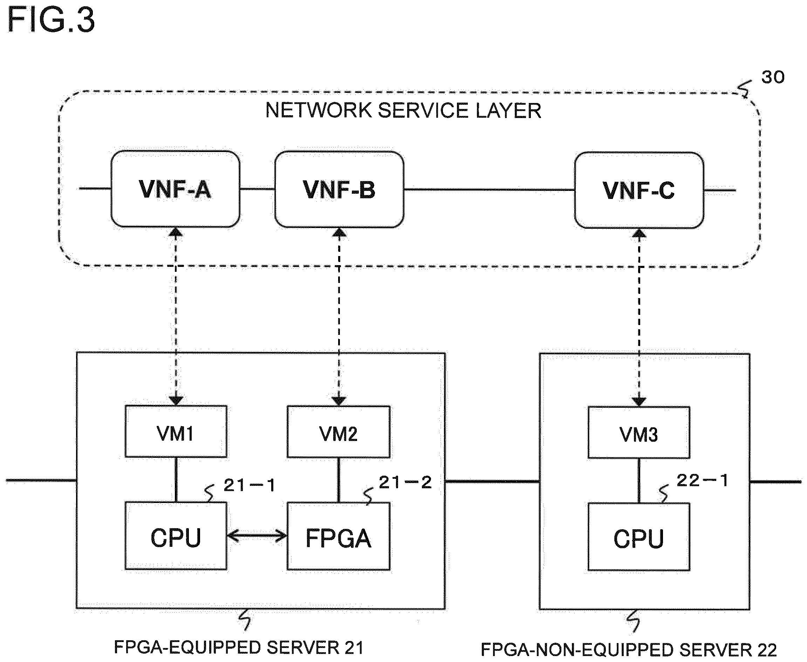

First, an exemplary system configuration for explaining respective exemplary embodiments of the present invention will be described with reference to Figs. 2 and 3. The system configuration is a simplified example for preventing complicated description, and is not intended to limit the present invention.

### <System>

As illustrated in Fig. 2, a management apparatus 10 manages a lower-layer network 20 including a plurality of servers, and an upper-layer network 20 including a plurality of VNFs. In this example, it is assumed for simplicity that the lower-layer network 20 includes servers A, B, C, and D, and the upper-layer network 30 includes virtual network functions VNF-1 to VNF-5.

At least one of the servers in the lower-layer network 20 is a server including a programmable logic circuit. As described below, a programmable logic circuit is a hardware circuit capable of performing programmable routine processing at a high speed, and is operable as an accelerator of a connected CPU. Further, a programmable logic circuit can implement a user-desired logic function in a short period of time, and also has an advantage that it is rewritable. Hereinafter, an FPGA is shown as an example of a programmable logic circuit. A server in which a CPU and an FPGA are connected with each other is called an FPGA-equipped server, and a server having no FPGA is called an FPGA-non-equipped server.

Each VNF in the upper-layer network 30 is set on a physical server of the lower-layer network 20. For example, in the system illustrated in Fig. 2, the VNF-1, the VNF-4, and the VNF-5 are set on the server A, the server C, and the sever D, respectively, and the VNF-2 and the VNF-3 are set on a single physical server B. The management apparatus 10 determines how to deploy VNFs on FPGA-equipped servers and FPGA-non-equipped servers. Fig. 3 illustrates an exemplary layout of VNFs.

In Fig. 3, an FPGA-equipped server 21 in the lower-layer network 20 has a configuration in which a CPU 21-1 and an FPGA 21-2 are connected with each other. In Fig. 3, a virtual machine VM1 is configured on the CPU 21-1 and a virtual machine VM2 is deployed on the FPGA 21-2, respectively. VNF-A in the upper-layer network 20 is deployed on the virtual machine VM1, and VNF-B is deployed on the virtual machine VM2 on the FPGA 21-2. The FPGA 21-2 is able to reconfigure a desired VNF by loading configuration data via a device for managing the FPGA-equipped server 21 such as the management apparatus 10. It is also possible to configure a plurality of virtual machines VMs on the CPU 21-1 or the FPGA 21-2, and to deploy VNFs on the virtual machines, respectively. An FPGA-non-equipped server 22 has a single CPU 22-1, and one or more virtual machine VM3 may be configured thereon, and a VNF may be deployed on each virtual machine VM3.

The network system as described above is managed by the management apparatus 10 so as to perform VNF deployment on the FPGA-equipped servers and the FPGA-non-equipped servers, a change in FPGA configuration, and the like. While the management apparatus 10 can collectively manage the network system as described above, it is also possible to have a configuration including management apparatuses for respective layers, such as a management apparatus for managing the upper-layer network 30 (VNF layer) and a management apparatus for managing the lower-layer network 20 (NFVI layer). Hereinafter, the management apparatus 10 and a management method, according to exemplary embodiments of the present invention, will be described in detail with reference to the drawings.

### 1. First Exemplary Embodiment

The management apparatus 10 according to a first exemplary embodiment of the present invention is able to configure a desirable forwarding graph with high reliability so as not to cause a bottleneck in server processing and inter-server communication, by performing correspondence management and path management between servers/FPGAs and VNFs in the lower-layer network 20 and the upper-layer network 30.

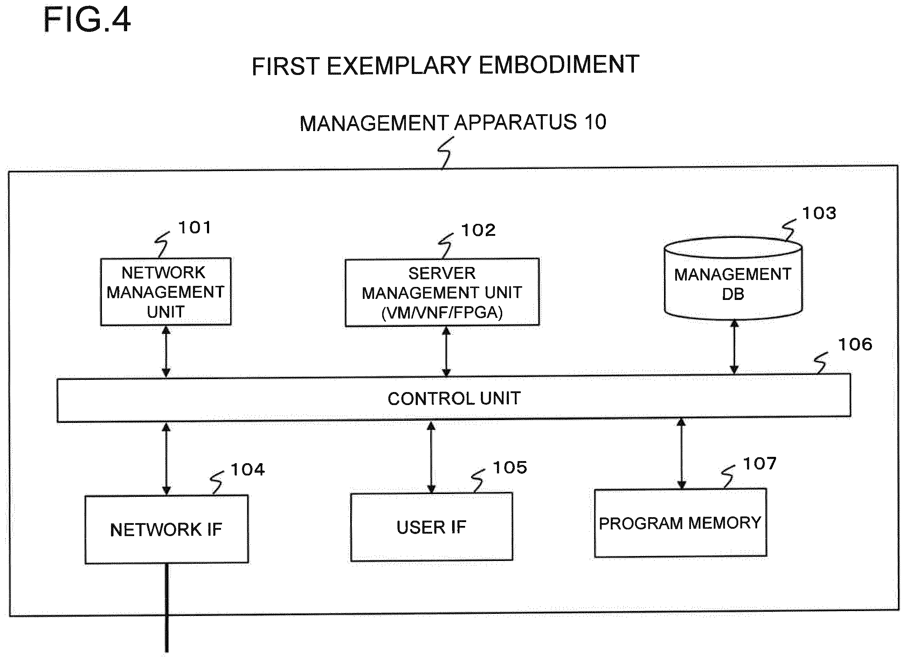

In Fig. 4, the management apparatus 10 includes a network management unit 101, a server management unit 102, and a management database 103. The management apparatus 10 also includes a network interface 104 that connects with respective servers in the lower-layer network 20 and the upper-layer network 30 as described above. An operator is able to perform various types of setting and manual operation for management via a user interface 105 as will be described below. A control unit 106 of the management apparatus 10 executes programs stored in a program memory 107 to thereby control the network management unit 101 and the server management unit 102, and perform data reference, registration, and update of the management database 103, as described below. The network management unit 101 performs path management by referring to monitoring information notified by each server and referring to the management database 103. The server management unit 102 refers to the management database 103 to manage correspondence between server/CPU/FPGA and VM/VNF.

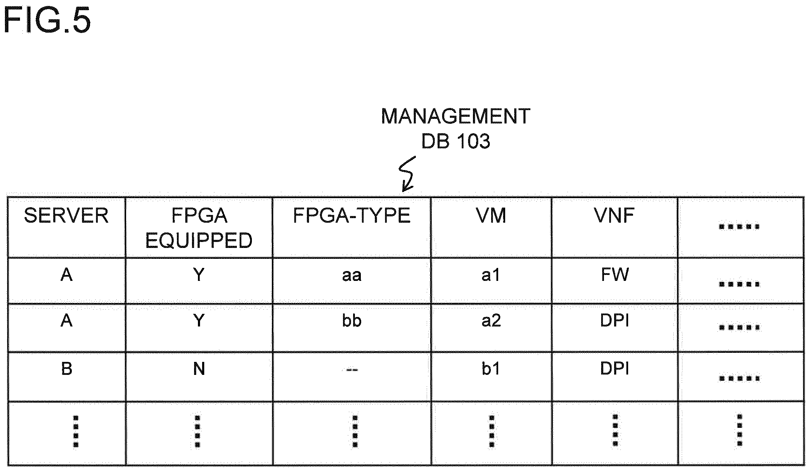

As illustrated in Fig. 5, the management database 103 includes a management table in which correspondence relations between servers, FPGAs, VMs, and VNFs, and status information related thereto are registered. In the management table illustrated in Fig. 5, whether or not each server is equipped with FPGA, the type of FPGA included in each server, and what type of VM/VNF operates on each FPGA, are registered. For example, a server A is a FPGA-equipped server (FPGA equipped = Y), and has two FPGA types namely "aa" and "bb". In the "aa" and "bb" FPGAs, VMs "a1" and "a2" are configured respectively, and a firewall "FW" and deep packet inspection "DPI" are set thereto as VNFs, respectively. Meanwhile, a server B is an FPGA-non-equipped server (FPGA equipped = N). VM "b1" is configured on the CPU of the server B, and "DPI" is set thereto as a VNF.

The management apparatus 10 of the present embodiment can perform network/VNF/FPGA management with use of management data stored in the management database 103 as described above. In more detail, in response to changes in the correspondence relations among servers, FPGAs, and VNFs, the management apparatus 10 can perform server management as follows:
- Selection of server when starting up VM/VNF (second exemplary embodiment);
- Selection of server when performing VM migration (third exemplary embodiment);
- Selection of server according to priority control (fourth exemplary embodiment); and
- Selection of server when changing a path in lower-layer network or when changing a forwarding graph in upper-layer network (fifth exemplary embodiment).

It should be noted that in the management apparatus 10, the functions of the network management unit 101, the server management unit 102, and the control unit 105 as described below may also be realized by executing programs stored in the program memory 107 on the CPU. Hereinafter, the aforementioned server management will be described in sequence.

### 2. Second Exemplary Embodiment

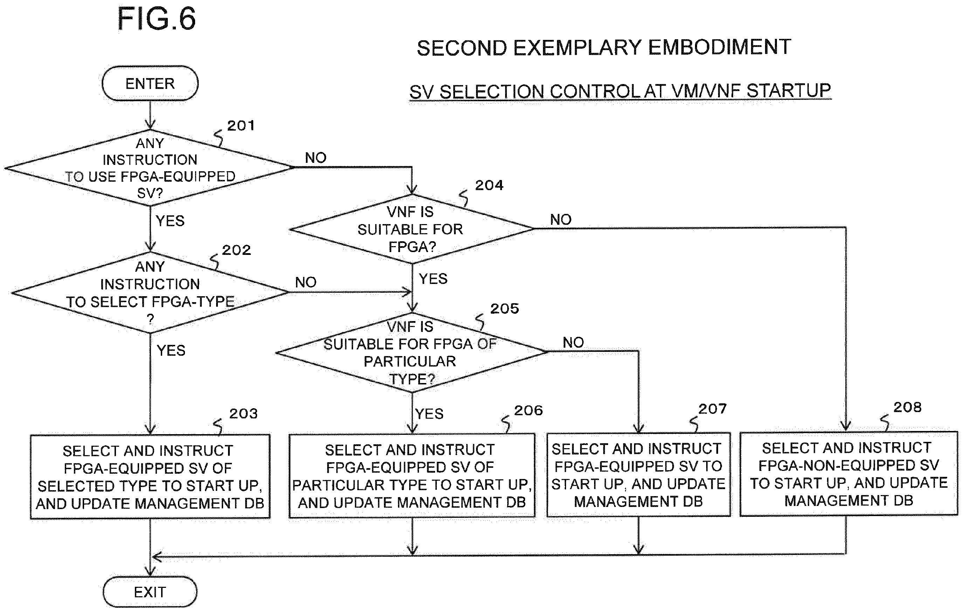

A management method according to a second exemplary embodiment of the present invention defines how to select a server to be started, when starting a VM/VNF. Hereinafter, a management method according to the present embodiment will be described with reference to Figs. 6 to 8.

### 2.1) Selection of server when starting VNF

In Fig. 6, when the server management unit 102 attempts to start a VNF (FW, for example), the server management unit 102 determines whether or not an operator instructs a use of an FPGA-equipped server via the user interface 105 (operation 201). When the use of an FPGA-equipped server is instructed (Yes at operation 201), the server management unit 102 then determines whether or not the operator selects an FPGA type (operation 202). When the FPGA type is selected (Yes at operation 202), the server management unit 102 selects an FPGA-equipped server of the selected FPGA type, instructs the selected FPGA-equipped server to start the VNF on the FPGA of the selected FPGA-equipped server, and registers a correspondence relation between the selected FPGA-equipped server and the VNF in the management database 103 (operation 203).

When no use of an FPGA-equipped server is instructed by the operator (No at operation 201), the server management unit 102 automatically determines whether or not the VNF is suitable for an FPGA based on, for example, the management database 103 (operation 204). When the VNF is suitable for an FPGA (Yes at operation 204), the server management unit 102 further automatically determines whether or not it is suitable for an FPGA of a particular type (operation 205). When it is suitable for an FPGA of a particular type (Yes at operation 205), the server management unit 102 instructs the FPGA-equipped server to start the VNF on the FPGA of the FPGA-equipped server of the particular type, and registers the correspondence relation between the FPGA-equipped server and the VNF in the management database 103 (operation 206).

When the VNF is unsuitable for an FPGA of a particular type (No at operation 205), the server management unit 102 instructs an FPGA-equipped server of any type to start the VNF on the FPGA of the FPGA-equipped server, and registers the correspondence relation between the FPGA-equipped server and the VNF in the management database 103 (operation 207). Even in the case where there is an instruction of using an FPGA-equipped server (Yes at operation 201) but there is no instruction of selecting an FPGA type (No at operation 202), the operation 205 is performed.

When the server management unit 102 determines that the VNF is unsuitable for an FPGA (No at operation 204), the server management unit 102 instructs an FPGA-non-equipped server to start the VNF, and registers the correspondence relation between the FPGA-non-equipped server and the VNF in the management database 103 (operation 208). Specific examples will be described below.

### 2.2) Examples

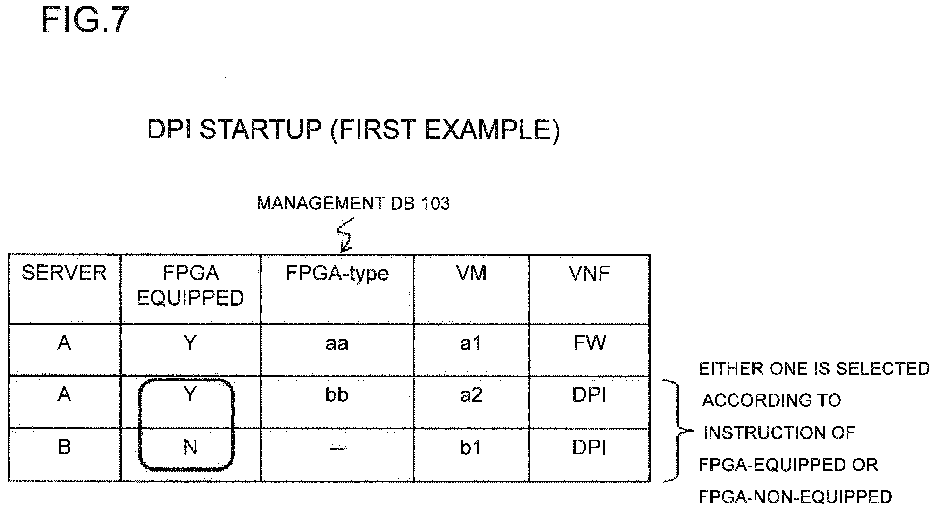

As a first example, as illustrated in Fig. 7, the server management unit 102 of the management apparatus 10 refers to the management database 103 depending on the presence or absence of an instruction to use an FPGA-equipped server when starting DPI (operation 201 of Fig. 6), selects an FPGA-equipped server A or an FPGA-non-equipped server B, and starts the DPI by the selected server.

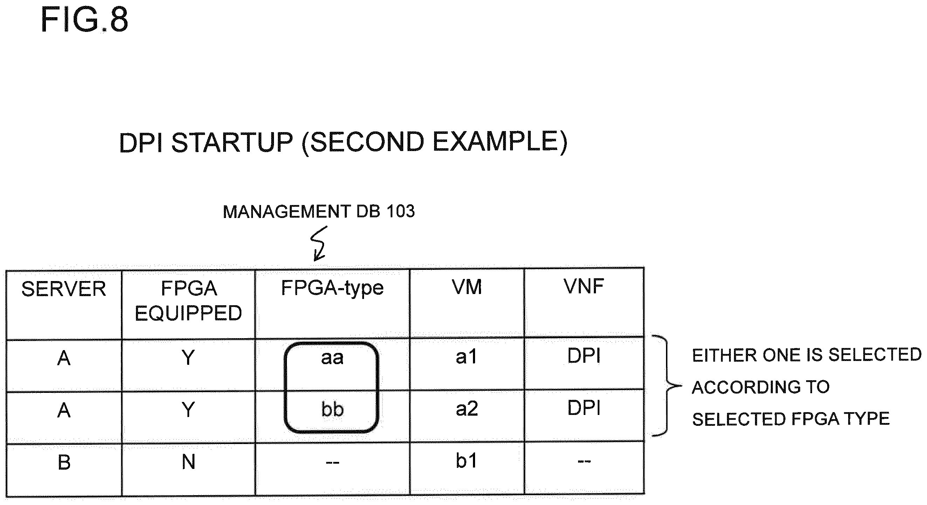

As a second example, as illustrated in Fig. 8, when there is an instruction to select a desired FPGA-type (operation 202 of Fig. 6), the server management unit 102 of the management apparatus 10 refers to the management database 103 to select the FPGA-equipped server A of the FPGA-type, and starts the DPI on the FPGA of the selected type.

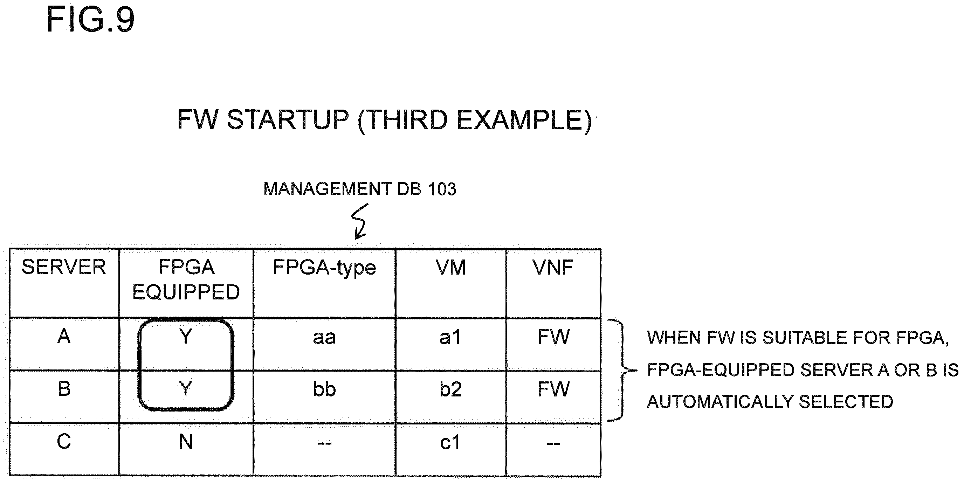

As a third example, as illustrated in Fig. 9, when the VNF to be started (in this case, FW) is suitable for the FPGA (Yes at operation 204 of Fig. 6), the server management unit 102 of the management apparatus 10 automatically selects an FPGA-equipped server A or B, and starts the FW on the FPGA.

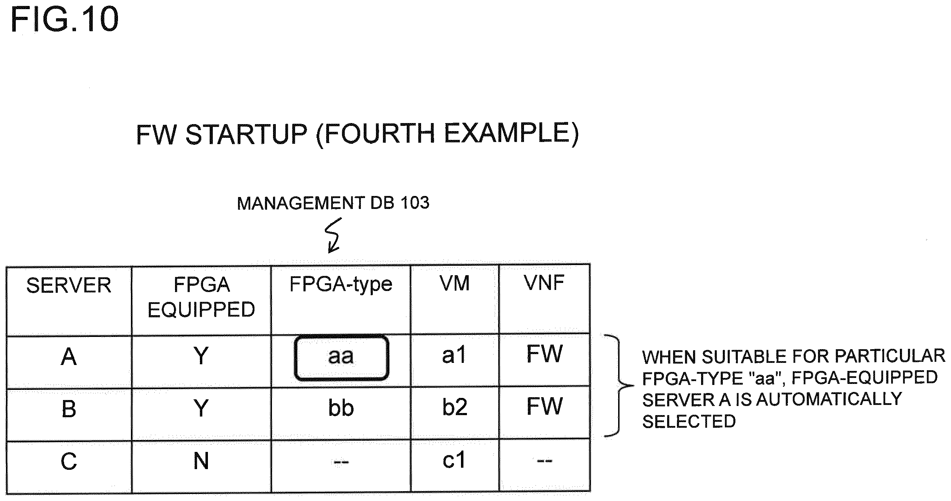

As a fourth example, as illustrated in Fig. 10, when the VNF to be started (in this case, FW) is suitable for a particular FPGA-type (in this case, "aa") (Yes at operation 205 of Fig. 6), the server management unit 102 of the management apparatus 10 automatically selects an FPGA-equipped server A and starts the FW on the FPGA.

### 2.3) Effects

As described above, according to the second exemplary embodiment of the present invention, when starting a VM/VNF, it is possible to select an optimum server or FPGA in consideration of the presence or absence of FPGA in a server or an FPGA-type of the FPGA.

### 3. Third Exemplary Embodiment

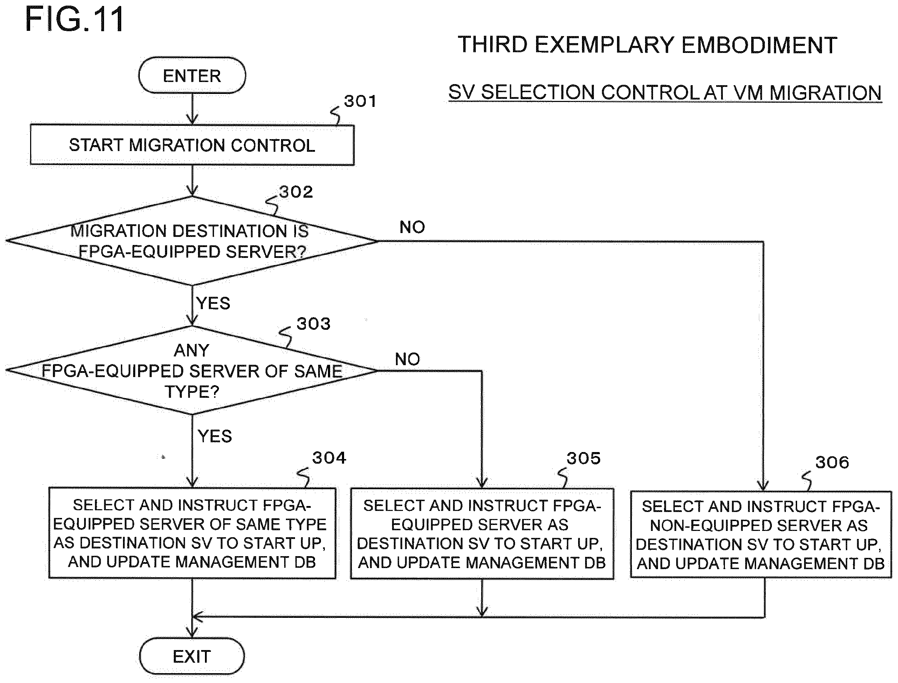

A management method according to a third exemplary embodiment of the present invention defines how to select a destination server for VM migration in the case of migration of a VM/VNF operating on a server to another server. Hereinafter, the management method according to the present embodiment will be described with reference to Figs. 11 to 13.

### 3.1) Selection of server when performing VM migration (third exemplary embodiment)

In Fig. 11, when starting migration control to replace a server on which a VNF operates to another server (operation 301), the server management unit 102 refers to the management database 103 to determine whether or not the source server on which the VNF operates is an FPGA-equipped server (operation 302). In the case of the source server being an FPGA-equipped server (Yes at operation 302), the server management unit 102 further determines whether or not there is an FPGA-equipped server of the same FPGA-type as that of the server on which the VNF operates (operation 303).

When there is an FPGA-equipped server of the same FPGA type (Yes at operation 303), the server management unit 102 selects the FPGA-equipped server as a migration-destination server, instructs the selected FPGA-equipped server to start the VNF on the FPGA of the same type, and registers a correspondence relation between the FPGA of the FPGA-equipped server and the VNF in the management database 103 (operation 304).

When there is no FPGA-equipped server of the same FPGA type (No at operation 303), the server management unit 102 selects an arbitrary or predetermined FPGA-equipped server as a migration-destination server, instructs the selected FPGA-equipped server to start the VNF on the FPGA of the same type, and registers a correspondence relation between the FPGA of the FPGA-equipped server and the VNF in the management database 103 (operation 305).

When the source server is an FPGA-non-equipped server (No at operation 302), the server management unit 102 selects an arbitrary or predetermined FPGA-non-equipped server as a migration-destination server, instructs the selected FPGA-non-equipped server to start the VNF, and registers a correspondence relation between the FPGA-non-equipped server and the VNF in the management database 103 (operation 306). Specific examples will be described below.

### 3.2) Examples

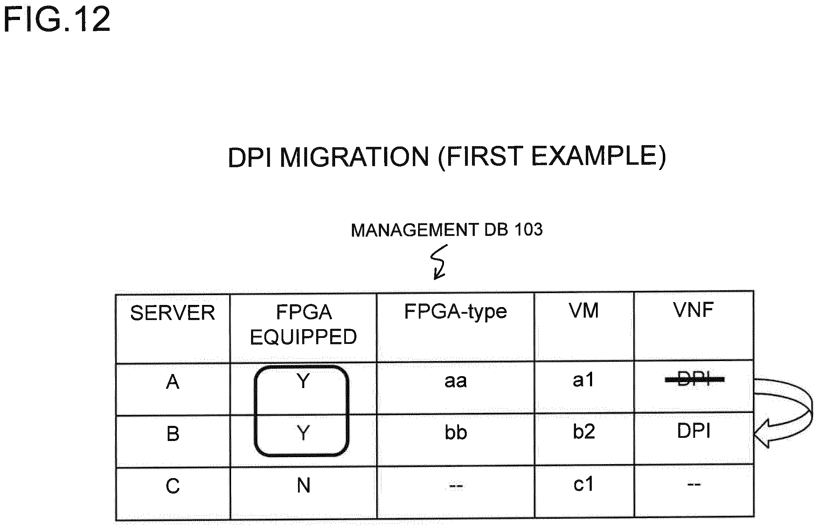

As a first example, as illustrated in Fig. 12, at the time of server replacement, the server management unit 102 of the management apparatus 10 prepares an FPGA-equipped server for a VNF (in this example, DPI) operating on an FPGA. In more detail, when a server A on which the DPI operates is FPGA-equipped, the server management unit 102 refers to the management database 103 to select an FPGA-equipped server B as a migration-destination server, and instructs migration.

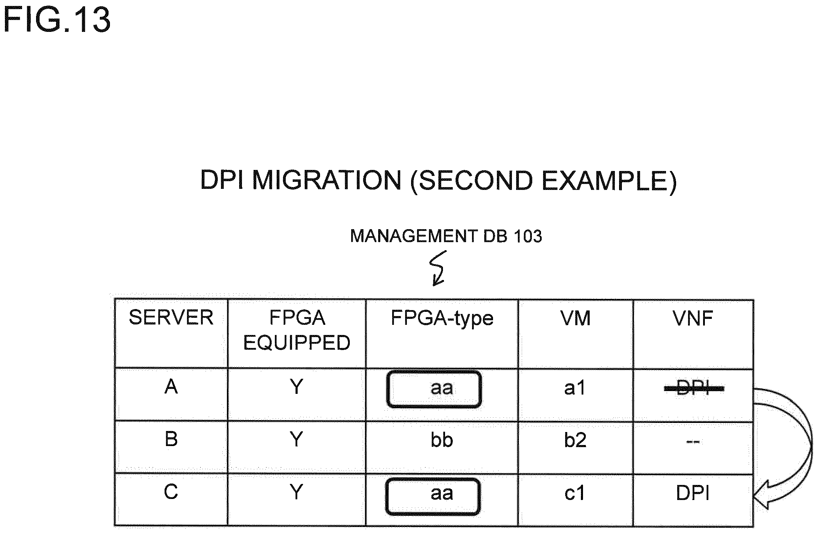

As a second example, as illustrated in Fig. 13, at the time of server replacement, the server management unit 102 of the management apparatus 10 prepares an FPGA-equipped server of the same type for a VNF (in this example, DPI) operating on an FPGA of a type. In more detail, when the FPGA type of a server A on which the DPI operates is "aa", the server management unit 102 refers to the management database 103 to select a server C of the same FPGA-type as a migration destination, and instructs migration.

### 3.3) Effects

As described above, according to the third exemplary embodiment of the present invention, at the time of VM migration for migration of a VM/VNF operating on a server to another server, it is possible to select a migration-destination server according to the attribute of the source server, and to select an optimum server or FPGA in consideration of FPGA-equipped or FPGA-type.

### 4. Fourth Exemplary Embodiment

A management method according to a fourth exemplary embodiment of the present invention introduces priority control for server selection at the time of VNF startup or VM migration to thereby promote proper and fair selection of a sever. For example, priority is set in advance depending on whether or not it is suitable for a FPGA or whether or not it is suitable for a particular FPGA-type.

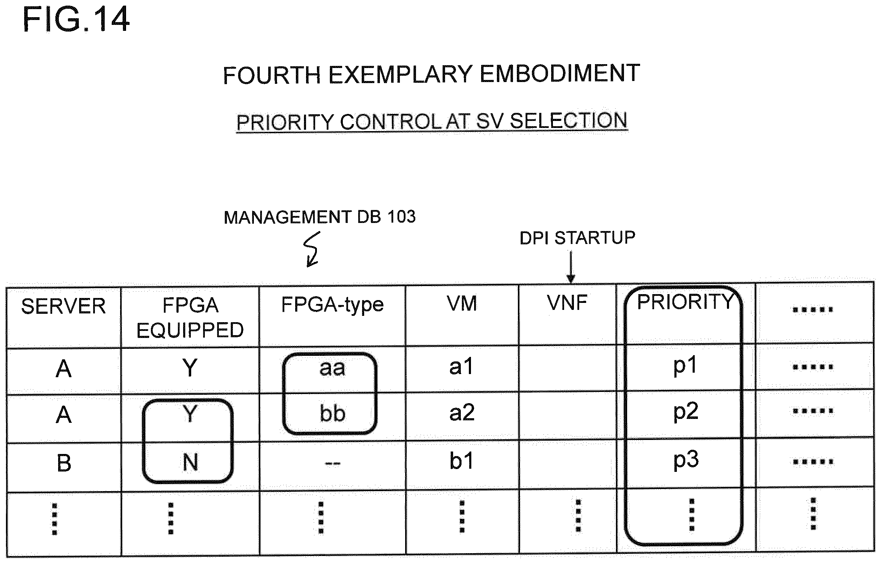

As illustrated in Fig. 14, when starting DPI, the server management unit 102 may adopt any of the following criteria as a criterion for selecting a server to be used:
a) Giving higher priority to an FPGA-equipped server than a FPGA-non-equipped server,
b) Giving higher priority to a server of a particular FPGA-type than servers of other FPGA-types,
c) Selecting a server according to the priority assigned in advance, and the like. Alternatively, a combination of these criteria may be adopted. For example, the server management unit 102 can refer to the management database 103 to select a server in which FPGA-equipped is "Y" in preference, or a server having a particular FPGA-type "aa" in preference. Alternatively, as illustrated in Fig. 14, it is possible to add a priority field to the management database 103 to thereby start a VNF sequentially in descending order of priority. Selection of a server at the time of VM migration is also performed similarly.

### 5. Fifth Exemplary Embodiment

A management method according to a fifth exemplary embodiment of the present invention manages server selection and a path change at the time of changing a path in the lower-layer network or at the time of changing a forwarding graph in the upper-layer network , allowing optimum selection of a server or an FPGA in consideration of the presence or absence of FPGA or FPGA-type of a server.

### 5.1) Path change control

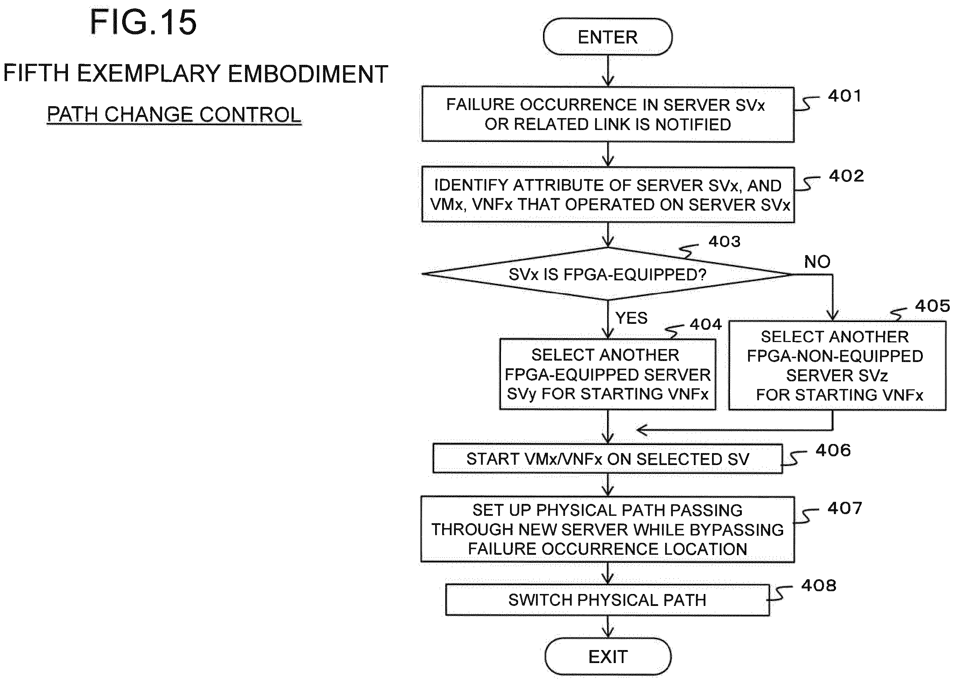

In Fig. 15, the network management unit 101 monitors status information notified from each server. It is assumed that the network management unit 101 is notified by a server SVx of failure occurrence or communication quality deterioration (operation 401). When receiving a failure occurrence notification, the server management unit 102 refers to the management database 103 to identify the attribute (FPGA -equipped or -non-equipped, FPGA-type) of the server SVx, and a VMx and a VNFx having operated on the server SVx (operation 402). As an example, when the server SVx is FPGA-equipped (Yes at operation 403), the server management unit 102 searches the management database 103 to select an available FPGA-equipped server SVy (operation 404). Meanwhile when the server SVx is FPGA-non-equipped, the server management unit 102 selects an available FPGA-non-equipped server SVz (operation 405). The server management unit 102 instructs the selected server SVy/SVa to start the VMx/VNFx having operated on the SVx (operation 406).

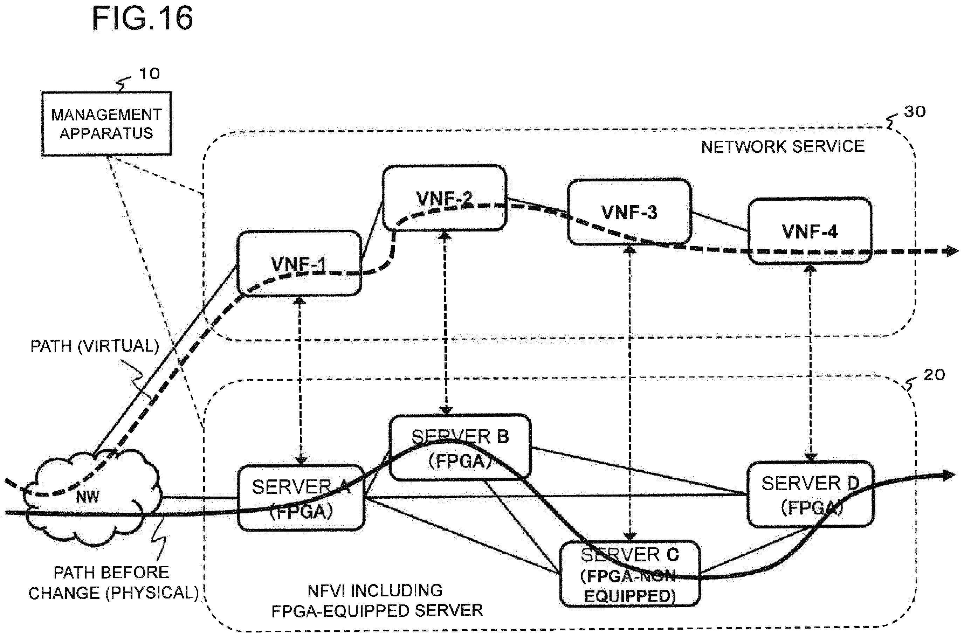

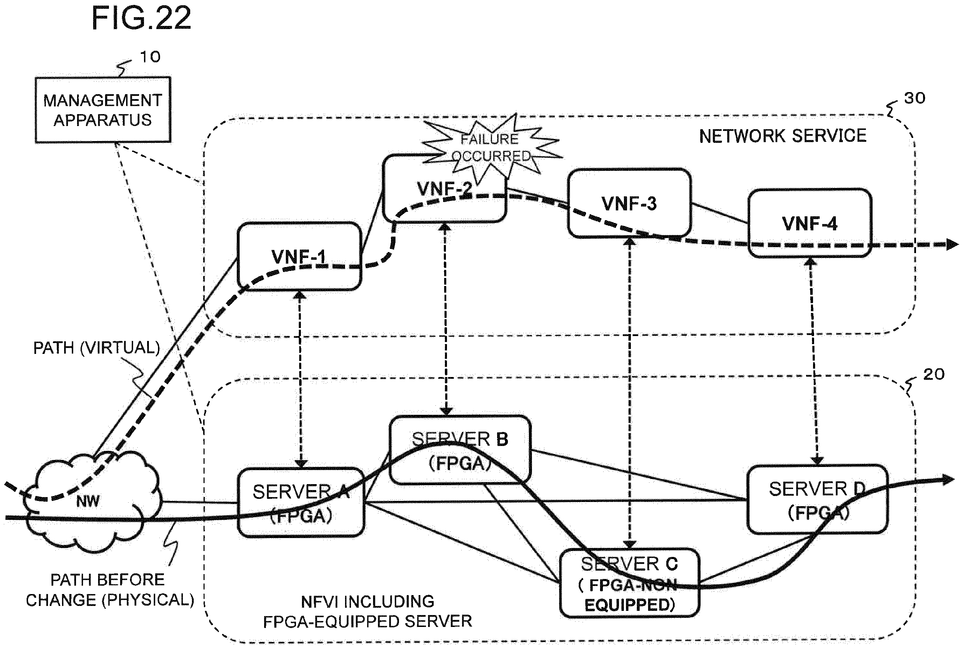

In this way, when an alternate server SVy or SVz having the same attribute as that of the server SVx is prepared, the network management unit 101 sets a new bypass in the lower-layer network 20 to pass through the server SVy/SVz in place of the server SVx in which a failure occurred (operation 407), and performs path switching (operation 408). Hereinafter, description will be given on an example of path change control in the lower-layer network with reference to Figs. 16 to 21, and on an example of path change control in the upper-layer network with reference to Figs. 22 to 24.

### 5.2) Path change control in lower-layer network

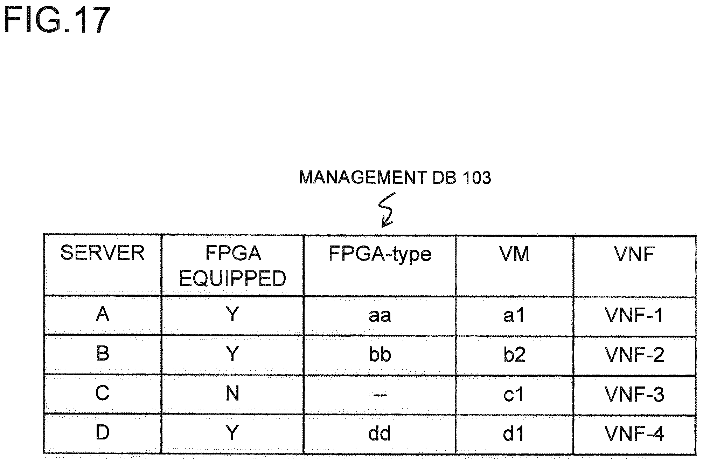

As illustrated in Fig. 16, it is assumed that in the lower-layer network 20, FPGA-equipped servers A, B, and D and an FPGA-non-equipped server C are connected in a mesh topology, and that in the upper-layer network 30, virtual network functions VNF-1 to VNF-4 operate on the servers A to D respectively to form a forwarding graph VNF-1 to VNF-4. In that case, a physical path in the lower-layer network 20 is the servers A - B - C - D, and the data illustrated in Fig. 17 is registered in the management database 103 of the management apparatus 10.

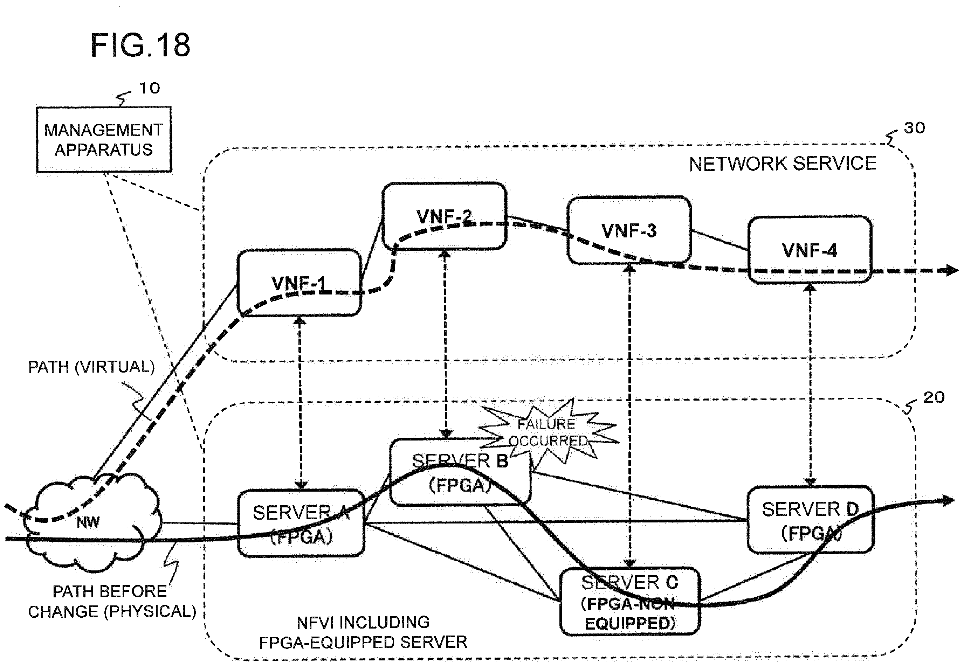

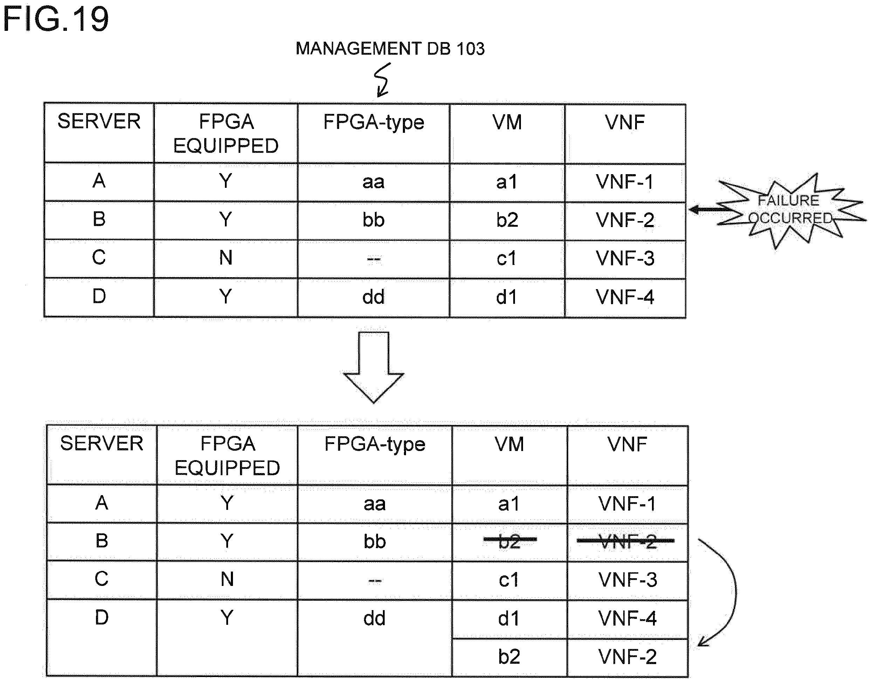

In this state, it is assumed that a failure occurs in the server B as illustrated in Fig. 18. When receiving a failure occurrence notification, the server management unit 102 of the management apparatus 10 refers to the management database 103 to specify the attributes (FPGA-equipped, FPGA-type) of the server B, and a VMb2 and a VNF-2 having operated on the server B, selects the server D having an FPGA similar to the server B, and instructs the server D to start the VNF-2 on the FPGA of the server D. Fig. 19 illustrates a change in the registered data in the management database 103 from occurrence of a failure to startup of the VNF-2 on the server D.

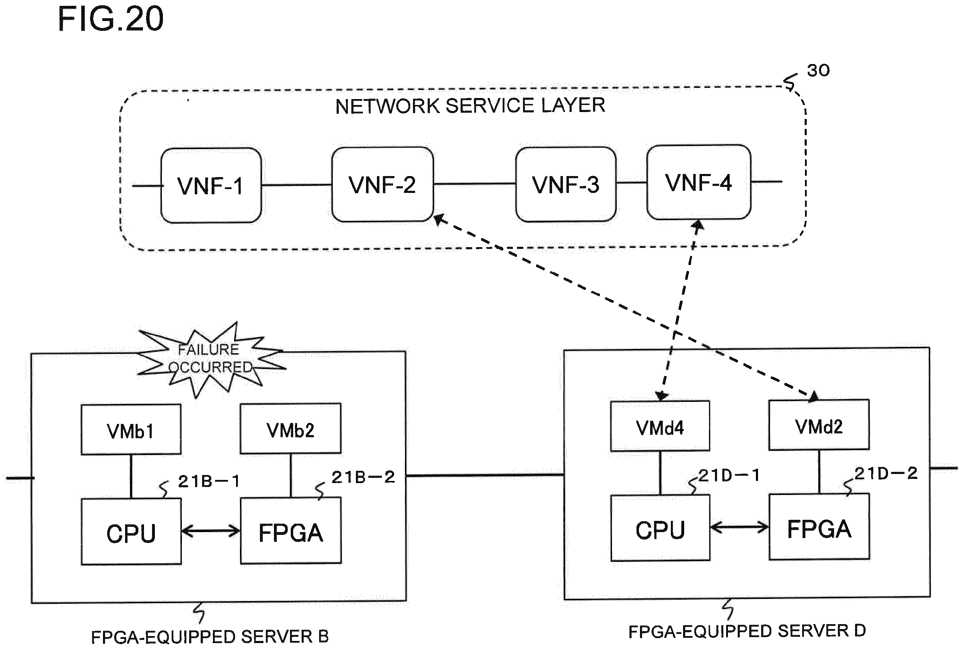

As illustrated in Fig. 20, it is assumed that the server B includes a CPU 21B-1 and an FPGA 21B-2, and the server D includes a CPU 21D-1 and an FPGA 21D-2, and that the VMb2/VNF-2 operate on the FPGA 21B-2 and VMd4/VNF-4 operate on the CPU 21D-1. In this state, when a failure occurs in the server B, the management apparatus 10 controls the server D to start the VNF-2 on the FPGA 21D-2 of the server D.

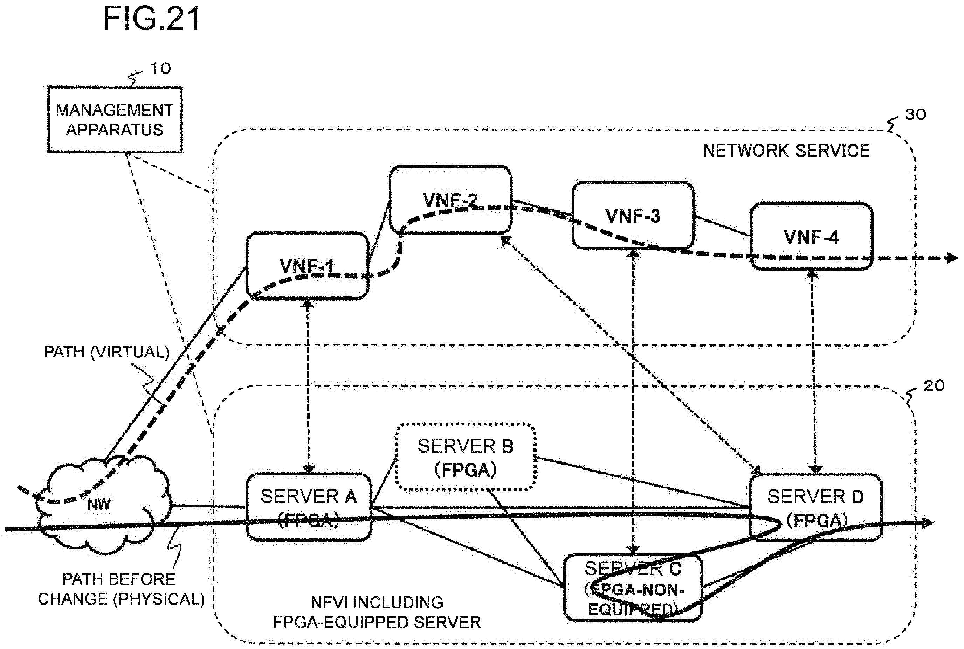

Accordingly, as illustrated in Fig. 21, the network management unit 101 of the management apparatus 10 sets a physical path in which the server A of the lower-layer network 20 operates the VNF-1, the server D operates the VNF-2, the server C operates the VNF-3, and the server D operates the VNF-4 so that the forwarding graph VNF-1 to VNF-4 of the upper-layer network 30 is maintained.

### 5.3) Path change control in upper-layer network

Path change control at the time of changing a forwarding graph in the upper-layer network is similar to the case of the lower-layer network as described above. For example, as illustrated in Fig. 16, in the upper-layer network 30, it is assumed that the virtual network functions VNF-1 to VNF-4 operate on the servers A to D respectively whereby a forwarding graph is formed, that a physical path in the lower-layer network 20 is the servers A - B - C - D, and that the data illustrated in Fig. 17 is registered in the management database 103 of the management apparatus 10.

In this state, as illustrated in Fig. 22, when a failure occurs in the virtual network function VNF-2 on the server B, for example, path change control is performed so as to maintain the forwarding graph, as described below.

When failure occurrence in the VNF-2 is notified, the server management unit 102 of the management apparatus 10 refers to the management database 103 to identify the VMb2 and the server B on which the VNF-2 operated. Then, the server management unit 102 selects the server D having the same attributes (FPGA-equipped, FPGA-type) as those of the server B, and instructs the server D to start the VNF-2 on the FPGA of the server D. A change in the registered data in the management database 103 from occurrence of a failure to startup of the VNF-2 on the server D is the same as that illustrated in Fig. 19.

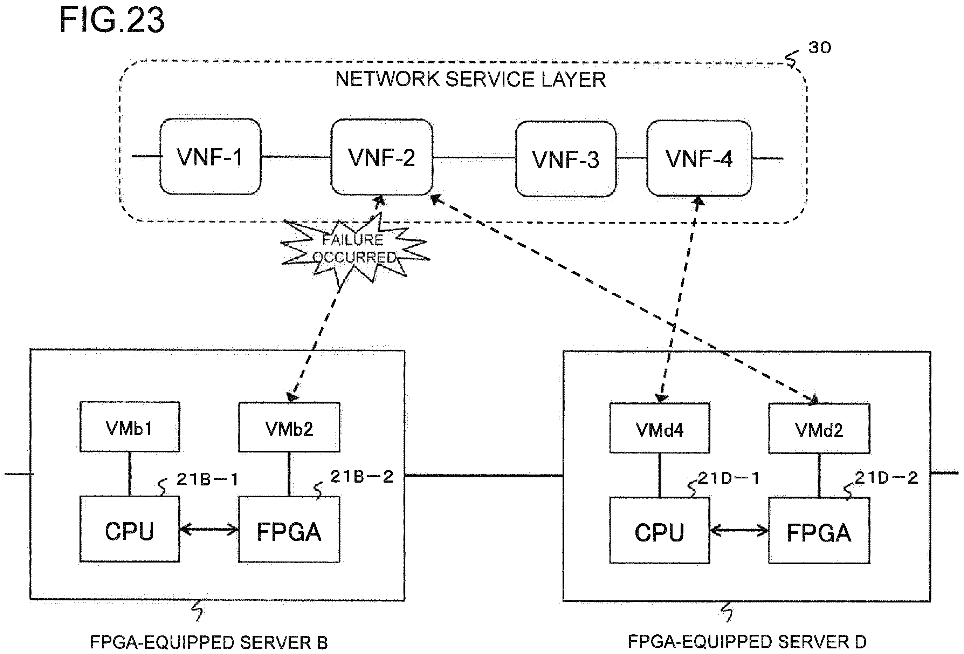

As illustrated in Fig. 23, it is assumed that the server B includes the CPU 21B-1 and the FPGA 21B-2, and the server D includes the CPU 21D-1 and the FPGA 21D-2, and that the VMb2/VNF-2 operate on the FPGA 21B-2 and the VMd4/VNF-4 operate on the CPU 21D-1. In this state, when a failure occurs in the VNF-2, the management apparatus 10 controls the server D to start the VNF-2 on the FPGA 21D-2 of the server D.

As described above, path control for maintaining the forwarding graph is triggered by detection of a failure of a virtual network function. Specifically, as in the case of Fig. 21 described above, the network management unit 101 of the management apparatus 10 sets a physical path in which the server A of the lower-layer network 20 operates the VNF-1, the server D operates the VNF-2, the server C operates the VNF-3, and the server D operates the VNF-4 so that the forwarding graph VNF-1 to VNF-4 of the upper-layer network 30 is maintained.

### 5.4) Effects

As described above, according to the fifth exemplary embodiment of the present invention, server selection and a path change at the time of changing a path in the lower-layer network or at the time of changing a forwarding graph in the upper-layer network can be optimized in consideration of the presence or absence of FPGA-equipped or FPGA-type of the servers.

### 6. Sixth Exemplary Embodiment

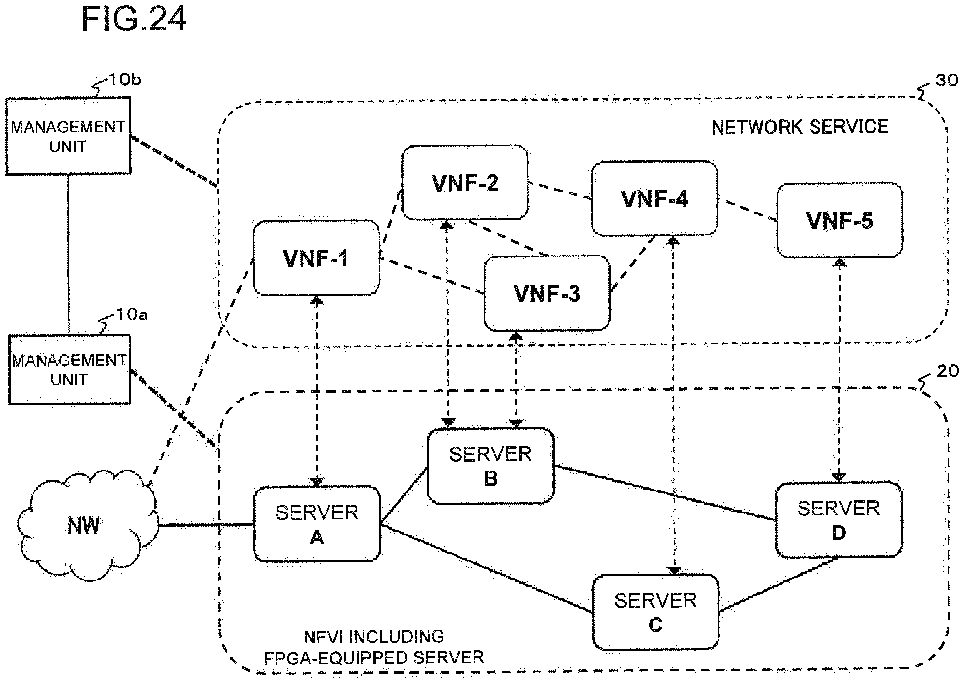

In the first to fifth exemplary embodiments described above, exemplary cases where the management apparatus 10 collectively manages the network system are described. However, the present invention is not limited to such collective management. The present invention may have a configuration in which respective layers of a multilayer system are managed cooperatively by different management units. Fig. 24 illustrates an example of such a distributed management system.

As illustrated in Fig. 24, a network system according to the sixth exemplary embodiment of the present invention includes a management unit 10a that manages the lower-layer network 20 (VNIF layer) and a management unit 10b that manages the upper-layer network 30 (VNF layer). The management units 10a and 10b manage the lower-layer network 20 and the upper-layer network 30 in cooperation with each other. A management method thereof is the same as that of each exemplary embodiment described above. Accordingly, the description thereof is omitted.

The management units 10a and 10b that manage respective layers may be configured such that individual devices communicably connected with each other perform the management operation of the respective exemplary embodiments in cooperation with each other, or they perform the management operation under management of a host device. It is also acceptable to have a configuration in which the management units 10a and 10b that manage the respective layers, or a host management unit that manages the management units 10a and 10b may be in one management apparatus while being separated functionally.

### INDUSTRIAL APPLICABILITY

The present invention is applicable to a system in which virtual network functions (VNF) are deployed on a network.

### REFERENCE SIGNS LIST

- 10: management apparatus
- 20: lower-layer network
- 21-1: CPU
- 21-2: FPGA
- 22-1: CPU
- 30: upper-layer network
- 101: network management unit
- 102: server management unit
- 103: management database
- 104: network interface
- 105: user interface
- 106: control unit
- 107: program memory
- VNF: virtual network function

## Claims

1. A management apparatus for a network including servers on which virtual network functions operate, the management apparatus comprising:
storage means for storing at least one virtual network function operating on a server and server attribute information , which are associated with each other, the server attribute information indicating whether or not the server includes a programmable logic circuit as an operation subject of the virtual network function; and
management means for, at least, managing the server that includes the programmable logic circuit based on the associated information, wherein the virtual network function operates on the server.

2. The management apparatus according to claim 1, wherein
when starting one virtual network function, the management means selects a server or a programmable logic circuit as an operation subject of the one virtual network function, based on the associated information.

3. The management apparatus according to claim 1 or 2, wherein
the management means selects a server or a programmable logic circuit as an operation subject of the one virtual network function, further based on an instruction from outside or on a characteristic of virtual network function.

4. The management apparatus according to any of claims 1 to 3, wherein
the management means selects a server or a programmable logic circuit as an operation subject of the one virtual network function, further based on a type of the programmable logic circuit.

5. The management apparatus according to any of claims 1 to 4, wherein
when performing migration of the virtual network function from a first server to a second server, the management means selects the second server having an attribute matched to an attribute of the first server.

6. The management apparatus according to any of claims 1 to 5, wherein
the management means selects a server or a programmable logic circuit as an operation subject of the virtual network function in accordance with preset priority.

7. The management apparatus according to any of claims 1 to 6, wherein
when switching a path passing through a first server configured to implement a certain virtual network function to a path passing through a second server, the management means selects the second server having an attribute matched to an attribute of the first server.

8. The management apparatus according to any of claims 1 to 7, wherein
the network includes: first processing means for implementing a desired virtual network function by software control; and second processing means including a programmable logic circuit for implementing the desired virtual network function by configuration data, and
the management means selects the first processing means or the second processing means as an operation subject of the desired virtual network function.

9. A management method for a network including servers on which virtual network functions operate, the management method comprising:
by storage means, storing at least one virtual network function operating on a server and server attribute information, which are associated with each other, the server attribute information indicating whether or not the server includes a programmable logic circuit as an operation subject of the virtual network function; and
by management means, at least, managing at least one server that includes the programmable logic circuit based on the associated information, wherein the virtual network function operates on the server.

10. The management method according to claim 9, wherein
the management means, when starting one virtual network function, selects a server or a programmable logic circuit as an operation subject of the one virtual network function, based on the associated information.

11. The management method according to claim 9 or 10, wherein
the management means selects a server or a programmable logic circuit as an operation subject of the virtual network function, further based on an instruction from outside or on a characteristic of virtual network function.

12. The management method according to any of claims 9 to 11, wherein
the management means selects a server or a programmable logic circuit as an operation subject of the virtual network function, further based on a type of the programmable logic circuit.

13. The management method according to any of claims 9 to 12, wherein
when performing migration of the virtual network function from a first server to a second server, the management means selects the second server having an attribute matched to an attribute of the first server.

14. The management method according to any of claims 9 to 13, wherein
the management means selects a server or a programmable logic circuit as an operation subject of the virtual network function in accordance with preset priority.

15. The management method according to any of claims 9 to 14, wherein
when switching a path passing through a first server configured to implement a certain virtual network function to a path passing through a second server, the management means selects the second server having an attribute matched to an attribute of the first server.

16. The management method according to any of claims 9 to 15, wherein
the network includes: first processing means for implementing a desired virtual network function by software control; and second processing means including a programmable logic circuit for implementing the desired virtual network function by configuration data, and
the management means selects the first processing means or the second processing means as an operation subject of the desired virtual network function.

17. A network system including servers on which virtual network functions operate, the network system comprising:
a lower-layer network in which a plurality of servers are connected, the servers including at least one server supporting a programmable logic circuit;
an upper-layer network including at least one virtual network function operable on any of the servers; and
a management apparatus that manages the lower-layer network and the upper-layer network, wherein
the management apparatus, at least, manages the server that includes a programmable logic circuit based on associated information, wherein a virtual network function operates on the server, wherein the associated information associates at least one virtual network function operating on a server with server attribute information which indicates whether or not the server includes a programmable logic circuit as an operation subject of the virtual network function.

18. A program for causing a computer to function as a management apparatus for a network including servers on which virtual network functions operate:
storing at least one virtual network function operating on a server and server attribute information , which are associated with each other, the server attribute information indicating whether or not the server includes a programmable logic circuit as an operation subject of the virtual network function; and
at least, managing at least one server that includes the programmable logic circuit based on the associated information, wherein the virtual network function operates on the server.
